# EUROPEAN PATENT SPECIFICATION

(11) **EP 3 168 145 B1**
(45) Date of publication and mention of the grant of the patent: **29.01.2020**
(21) Application number: 16198161.8
(22) Date of filing: 10.11.2016
(51) Int. Cl.: B64C 27/467

(54) **REDUCED POWER INDIVIDUAL BLADE CONTROL SYSTEM ON A ROTORCRAFT**
INDIVIDUELLES BLATTSTEUERUNGSSYSTEM MIT REDUZIERTER LEISTUNG AUF EINEM DREHFLÜGLER
SYSTÈME DE COMMANDE DES PALES INDIVIDUELLES À PUISSANCE RÉDUITE SUR UN GIRAVION

(30) Priority: 10.11.2015 US 201562253382 P
(43) Date of publication of application: 17.05.2017
(73) Proprietor: Sikorsky Aircraft Corporation, Stratford, CT 06615 (US)
(72) Inventor: Lauder, Timothy Fred, Oxford, CT 06478 (US); Hartmann, Jonathan, Lorton, VA 22079 (US); Lappos, Nicholas D., Guilford, CT 06437 (US)
(74) Representative: Schmitt-Nilson Schraud Waibel Wohlfrom Patentanwälte Partnerschaft mbB

(56) References cited:
- EP-A1- 0 601 527
- WO-A2-2012/076705
- DE-A1-102008 036 760
- US-A- 3 129 769
- US-A1- 2005 008 490
- US-A1- 2005 123 400
- US-B1- 8 845 290

## Description

The subject matter disclosed herein relates generally to rotary wing aircraft, and more particularly, to a control system for independently pitching the blades of a rotor of a rotary wing aircraft.

Control of a rotary wing aircraft is affected by varying the pitch of the rotor blades individually at a specific point in the rotation (such that each blade has the same angle at the same point as the rotor rotates) and by varying the pitch of all of the blades uniformly at the same time. These are known respectively as cyclic and collective pitch control. Blade pitch control of a rotary wing aircraft main rotor is commonly achieved through a swashplate.

The swashplate is typically concentrically mounted about the rotor shaft. The swashplate generally includes two rings connected by a series of bearings with one ring connected to the airframe (stationary swashplate) and the other ring connected to the rotor hub (rotating swashplate). The rotating ring is connected to the rotor hub through a pivoted link device typically referred to as "rotating scissors", with the static ring similarly connected to the airframe with a stationary scissor assembly. The rotating swashplate rotates relative the stationary swashplate. Apart from rotary motion, the stationary and rotating swashplate otherwise move as a unitary component. Cyclic control is achieved by tilting the swashplate relative to a rotor shaft and collective control is achieved by translating the swashplate along the rotor shaft.

Pitch control rods mounted between the main rotor blades and the rotating swashplate mechanically link the rotating swashplate to each individual main rotor blade. Main rotor servos extend between and attach to the stationary swashplate and the airframe. Displacement of the main rotor servos results in displacement of the stationary swashplate. Displacement of the stationary swashplate results in displacement of the rotating swashplate. Displacement of the rotating swashplate results in displacement of pitch control rods and therefore a pitch displacement in each individual main rotor blade. Hence, by actuating selected main rotor servos, collective and cyclic commands are transferred to the rotor head as vertical and/or tilting displacement of the swashplates resulting in pitch control of the main rotor blades.

The swashplate and its associated linkages require a considerable amount of space, add to the aerodynamic drag of the aircraft, and account for a significant amount of gross weight. Due to their complexity and flight critical nature, the swashplate systems require regular and costly maintenance and inspection. Additionally, control inputs from swashplates are limited to sinusoidal collective and cyclic, which limit the resulting blade motion to steady and once per revolution rotation. Blade motions at higher harmonic frequencies have shown potential aircraft benefits such as improved performance and vibration. Thus, there is a continuing effort to improve blade pitch control for rotor systems of a rotary wing aircraft.

WO 2012/076705 A2 discloses an aircraft comprising rotary wings, said rotor comprising a rotor mast, with a longitudinal axis Z, for supporting the blades, and a device for controlling the blades. The rotor comprises a sensor for detecting the angular position of the mast. The device for controlling the blades comprises one actuator per blade, each blade being connected to the rotor mast by a fixed blade shaft having a radial axis X essentially perpendicular to the longitudinal axis Z, each actuator being designed to cause a controlled movement of a blade in an angular manner about the radial axis X, and each actuator being arranged at the same height as the associated blade.

US 2005/008490 A1 discloses a main rotor shaft mounted hydraulic pressure system. The rotor system includes a hydraulic pressure system located within a rotor shaft along an axis or rotation. The hydraulic pressure system is within the rotating field such that fluid pressure is generated and supplied from within the rotational field without the need to cross a rotational interface. Differential rotation between the rotor shaft and a standpipe rotates a hydraulic pump body relative a hydraulic pump shaft. The hydraulic pressure system is contained within a support structure so as to be readily mounted and removed from the rotor hub for replacement or maintenance. A gear system is mounted to the support structure between the standpipe and the hydraulic pump shaft to step-up or step-down the relative rotation between the rotor shaft and the standpipe.

The present invention relates to an aircraft rotor blade, an aircraft, and a method for controlling a rotor blade of an aircraft in accordance with the appended claims.

Features and advantages of the invention are apparent from the following detailed description taken in conjunction with the accompanying drawings in which like elements are numbered alike in the several FIGURES:
FIG. 1 illustrates an exemplary rotary wing aircraft for use with the present invention; and
FIG. 2 depicts a planform view of a rotor blade in accordance with an embodiment of the invention.

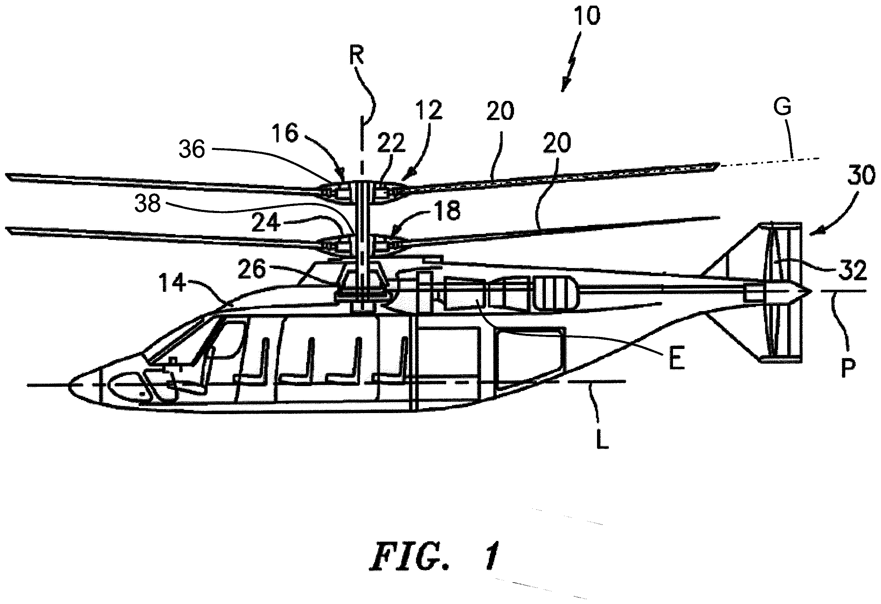

FIG. 1 illustrate an exemplary vertical takeoff and landing (VTOL) high speed compound or coaxial contra-rotating rigid rotor aircraft 10 having a dual, contra-rotating main rotor system 12, which rotates about a rotor axis of rotation R. The aircraft includes an airframe 14 which supports the dual, contra-rotating, coaxial main rotor system 12 as well as a translational thrust system 30 which provides translational thrust generally parallel to an aircraft longitudinal axis L.

The main rotor system 12 includes an upper rotor assembly 16 and a lower rotor assembly 18. Each rotor system 16, 18 includes a plurality of rotor blades 20 mounted to a respective rotor hub 22, 24. The main rotor system 12 is driven by a main gearbox 26. In alternative embodiments a main gearbox 26 is not necessary and the main rotor system 12 may be driven by torque from a mechanical or an electrical propulsion system. The translational thrust system 30 may be any propeller system including, but not limited to a pusher propeller, a tractor propeller, a nacelle mounted propeller etc. The illustrated translational thrust system 30 includes a pusher propeller system 32 with a propeller rotational axis P oriented substantially horizontal and parallel to the aircraft longitudinal axis L to provide thrust for high speed flight. The translational thrust system 30 may be driven through the main gearbox 26 which also drives the rotor system 12.

The main gearbox 26 is driven by one or more engines, illustrated schematically at E. In the case of a rotary wing aircraft, the gearbox 26 may be interposed between one or more gas turbine engines E, the main rotor system 12 and the translational thrust system 30. Although a particular rotary wing aircraft configuration is illustrated and described in the disclosed non-limiting embodiment, other configurations and/or machines with rotor systems are within the scope of the present invention.

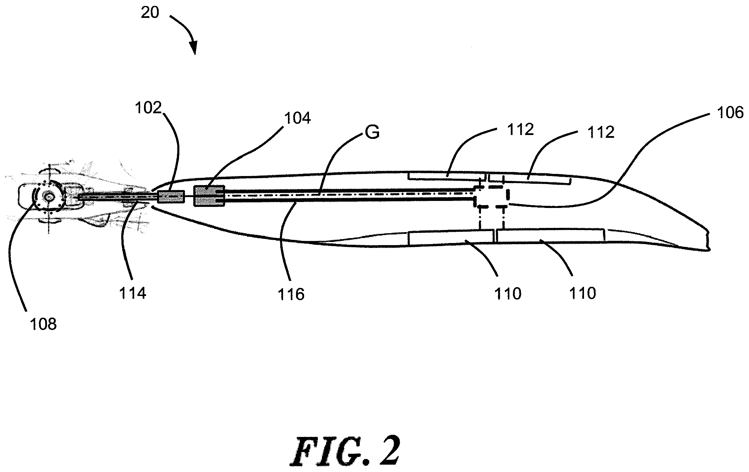

Referring now to FIG. 2, a rotor blade 20 is pictured. Although illustrated as a main rotor blade for a rotorcraft in this embodiment, the rotor blade 20 could also be used in other configurations, such as tail rotors and/or propellers. The rotor blade 20 contains a low power actuator that operates as the primary flight actuator controlling both the root rotation, and span-wise trailing edge control surfaces 110 and leading edge control surfaces 112. In varying embodiments the control surfaces may be flaps, slats, slots and/or blowers. In exemplary embodiments, the actuator is an electromagnetic actuator, but other types of actuators may be used. The actuator is composed of a triplex rotor servo 102 and a triplex rotary or linear servo 104. The triplex rotor servo 102 is located in the root end of the rotor blade 20. The triplex rotary or linear servo 104 is located within the airfoil portion of the rotor blade 20. Locating the actuator within the blade makes the rotor blade 20 an all-inclusive rotor control system that could be easily attached, removed and transferred to other aircraft. Locating the triplex rotor servo 102 in the root end of the rotor blade 20 minimizes the g-forces on the triplex rotor servo 102 to reduce wear and tear. Electric power and signal interface is provided to the actuator at the blade root end via wireless power transfer system 108. In one embodiment the wireless power transfer system 108 may be either inductive, whereas in another embodiment the wireless power transfer system 108 may be resonant inductive coupling. In yet another embodiment, the wireless power transfer system 108 could transfer power to the individual rotor blades 20 via a slip ring.

The triplex rotor servo 102 contains a torque tube 114, through which torque is transferred from the triplex rotor servo 102 to rotate the pitch of the rotor blade 20 around the blade pitch axis G at the root end of the rotor blade 20. The triplex rotary or linear servo 104 contains a pull-pull member 116 to transfer control commands through a control in-put / out-put 106 to the leading edge control surfaces 112 and the trailing edge control surfaces 110. The control in-put / out-put 106 is configured to provide a self-centering failure-safe mode to move all control surfaces back to a neutral position in the event of a system failure.

Control of the rotor blade 20 is provided through a combination of utilizing the triplex rotor servo 102 to pitch the rotor blade 20 at the root and the triplex rotary or linear servo 104 to control span-wise trailing edge control surface 110 and leading edge control surface 112 deflections, which in combination help pitch/rotate the rotor blade around the rotor blade pitch axis G. This control system is less complex than a conventional rotorcraft mechanical control system, while achieving far more complex control commands. Conventional rotor blades that receive control commands from swashplates are limited to sinusoidal collective and cyclic, which limits the resulting blade motion to steady and once per revolution rotation. The rotor blade 20 is able to achieve blade motions at higher harmonic frequencies by mixing root pitch utilizing the triplex rotor servo 102 and span-wise trailing edge control surface 110 and leading edge control surface 112 deflections using the triplex rotary or linear servo 104. The span-wise trailing edge control surface 110, the leading edge control surface 112, and the triplex rotor servo 102 can each actuate at a higher than once per revolution frequency, which allows the rotor blade 20 to achieve higher harmonic control. Since the control mechanisms are not subjugated to follow a swashplate tilt, the blade control pitch mapping could depart from the typical sinusoidal motion that was a byproduct of following a swashplate path and optimize azimuthal pitch mapping. Optimizing azimuthal pitch mapping means that blade pitch control could be imparted at the precise location in the azimuth of blade rotation to accomplish a desired performance goal, simply by actuating one or mixing all of the span-wise trailing edge control surface 110, the leading edge control surface 112 and the triplex rotor servo 102. It is important to note the failure of either the triplex rotor servo 102 or the triplex rotary or linear servo 104 may degrade higher order control capabilities of the rotor blade 20 but either servo by itself may still provide primary control to the rotor blade 20. For instance, in the event of a failure of the triplex rotary or linear servo 10, the span-wise trailing edge control surface 110, or the leading edge control surface 112; the control in-put / out-put 106 is configured to provide a self-centering failure-safe mode to move all control surfaces back to a neutral position and then the triplex rotor servo 102 will provide primary control to the rotor blade 20.

The ability of the rotor blade 20 to achieve non-sinusoidal cyclic and higher harmonic control offers many benefits including reduced vibration and increased blade clearance. Non-sinusoidal cyclic and higher harmonic control allows blade excitation to minimize blade vibration output to the aircraft. Once vibrations are sensed the span-wise trailing edge control surfaces 110 and leading edge control surfaces 112 can be operated in a manner that cancels the vibrations. non-sinusoidal cyclic and higher harmonic control allow specific tailoring of blade flapping motions for control of blade tip clearance for weapon firing, blade-to-fuselage clearance, and blade tip clearance of coaxial rotors. Non-sinusoidal pitch allows the flapping position of the rotor blade 20 to be controlled at a selected point in the azimuth of rotation. The value of non-sinusoidal pitch control of a rotor blade 20 is illustrated by the ability of the blade pitch to be discontinuously changed for a brief period of time to avoid rotor blade 20 motions that could cause an impact with other rotor blades 20 in a coaxial rotor system or the airframe 14 during maneuvers for a single rotor helicopter. These small, brief, and tailored individual rotor blade 20 commands can be made for periods of time that do not appreciably affect the overall behavior of the aircraft 10, but can help provide safety by controlling extreme flapping motions of the rotor blades 20. Another example concerning the motions of the rotor blades 20 is weapons fire, where the rotor blades 20 can enter the firing path of a weapon. The rotor blades 20 can be commanded to avoid impact or can provide feedback to inhibit weapons firing during extreme motions of the rotor blades 20. The ability rotor blade 20 to control the blade tip path through a closed loop method provides benefits over the conventional method of open loop blade angle control, where the blade tip path is a fall-out of the command induced on a swashplate.

In one embodiment, a flight control computer could be utilized to automate these desirable blade pitch characteristics through advanced control algorithms. The span-wise trailing edge control surfaces 110 and leading edge control surfaces 112 controlled by the triplex rotary or linear servo 104 will also help reduce the triplex rotor servo 102 control forces required by helping the blade pitch. Lower control forces mean the overall primary flight actuator could be less complex, smaller, lighter, and produce less heat than the larger actuators that are typically required by Individual Blade Control (IBC) systems. Lower control forces also means that the power required to operate all of the actuators is lower, which is extremely important to all-electric aircraft where energy storage may be limited.

Conventional rotorcrafts incorporate incredibly complex mechanical systems to control the main rotor assembly. The primary reason for the mechanical complexity is that the control input resides in a fixed system and the control output is in a rotating system. This requires a series of mechanical connections (pushrods, bell-cranks, swashplates, servos etc.) to transfer input motions from the cockpit to the remotely located rotating rotor system. With this type of system the control loads required to pitch the rotor blade at the root end involve force multiplication of the input and as a result each of the individual mechanical elements must be sized to react the increased loads, which in turn increases the system weight and complexity. Mechanical complexity affects many operational aspects an aircraft including maintainability, rotor pitch positional accuracy, and control rigging. Maintainability requirements increase as the number of mechanical elements in the control path increase. Each part must be inspected for damage then repaired or replaced as needed. Also, rotor pitch position accuracy is inversely proportional to the number of mechanical interfaces along the control path.

The rotor blade 20 replaces the complex mechanical flight control architecture of current rotorcraft with a fly-by-wire system that greatly reduces the number of mechanical components required in the fixed reference system as well it eliminates the need for a swashplate, thus reducing overall aircraft complexity and weight. Further, by reducing the complexity in the control path, the maintainability requirements decrease and rotor pitch position becomes more accurate. Additionally, control rigging procedures that help properly mount conventional blades are sequential and require extensive labor involvement but the ability of actuators to perform digital adjustments (displacements, position bias, and rate) simplifies rigging as well as provides inflight dynamic turning. Dynamic tuning eliminates the need aerodynamically tune each ship set of blades, which means that blades may easily be interchanged and dynamically tuned once on the aircraft. Thus, further reducing operational costs and increasing flexibility.

Heat management is also a critical concern for aircraft of all configurations. To minimize drag and thus improve flight performance, many rotor hubs are enclosed in fairings, as illustrated in figure 1 by fairings 36 and 38. The enclosed fairings, 36 and 38, are sleek and form fitting on the rotor head, which unfortunately makes it difficult to remove heat from the rotor system. Thus, smaller actuators that require less power emit less heat into the enclosed fairing would be welcomed by the industry.

The ability of the rotor blade to achieve non-sinusoidal cyclic and higher harmonic control allows the rotor blade 20 to be less structurally rigid than a typical rotorcraft blade, thus saving weight. Typical aircraft blades have to be designed structurally stiff enough to be torsional, flapwise, and edgewise dynamically stable and able to withstand a wide range of aerodynamic and vibratory loads. Built-in structurally rigidity is not necessary for the rotor blade 20 because the blade is capable of structural mode control by active moment control at different blade stations to relieve blade stresses during normal flight and at high maneuvering states. Thus, the rotor blade 20 could adapt midflight for varying amounts of aerodynamic and vibratory loads by activating the span-wise trailing edge control surfaces 110 and leading edge control surfaces 112. Also, a lighter blade in and of itself imparts less vibratory loads back into the aircraft 10.

The ability to separately control the span-wise trailing edge control surfaces 110 and leading edge control surfaces 112 allows the rotor blade 20 to adjust its twist distribution for different missions and flight conditions. Adjusting the twist distribution inflight can have a major impact on aircraft performance and fuel efficiency. For instance, the twist of the rotor blade 20 could be adjusted for hover performance or high speed forward flight. In another example, the twist distribution of the rotor blade 20 could be adjusted to maximize efficiency when flying at high altitude or in high temperature conditions.

The description of the present invention has been presented for purposes of illustration. Many modifications, variations, alterations, substitutions or equivalent arrangement not hereto described will be apparent to those of ordinary skill in the art without departing from the scope of the claims. Accordingly, the invention is not to be seen as limited by the foregoing description, but is only limited by the scope of the appended claims.

## Claims

1. An aircraft rotor blade (20) comprising:
a root end portion of the rotor blade (20) extending to a tip portion of the rotor blade (20) through an airfoil portion of the rotor blade (20), the airfoil portion having a leading edge portion and a trailing edge portion; and
at least one first actuator (102) located within the root end portion of the rotor blade (20), the at least one first actuator configured to pitch the rotor blade (20) about a blade pitch axis,
**characterized by**
at least one control surface (110, 112) mounted within the airfoil portion of the rotor blade (20);
at least one second actuator (104) located within the airfoil portion of the rotor blade (20), the at least one second actuator configured to actuate the at least one control surface (110, 112), wherein the at least one control surface (110, 112) includes at least one of a flap (110) located at the trailing edge portion of the rotor blade (20) and a slat (112) located at the leading edge portion of the rotor blade (20); and
a control in-put / out-put (106) configured to move the at least one control surface (110, 112) back to a neutral position when a failure renders the at least one control surface (110, 112) inoperative.

2. An aircraft (10) comprising;
an airframe (14);
a rotor system (12, 16, 18) mounted to the airframe (14), the rotor system (12, 16, 18) including a plurality of rotor blades (20), each of the plurality of rotor blades (20) including an aircraft rotor blade (20) according to claim 1.

3. The aircraft (10) of claim 2, wherein: a flight control computer is configured to command the amount of pitch of the rotor blade (20) about the pitch axis to achieve at least one of higher harmonic control, non-sinusoidal azimuthal pitch mapping, blade vibration reduction, blade stress reduction, and blade tip clearance.

4. A method for controlling a rotor blade (20) of an aircraft (10) according to claim 1, the method comprising:
rotating the rotor blade (20) about the pitch axis utilizing the at least one control surface (110, 112) located on the rotor blade (20) and the at least one first actuator (102) configured to pitch the rotor blade (20) about the pitch axis.

## Patentansprüche

1. Rotorblatt (20) für ein Luftfahrzeug, umfassend:
einen Wurzelendenabschnitt des Rotorblatts (20), der sich durch einen Profilabschnitt des Rotorblatts (20) zu einem Spitzenabschnitt des Rotorblatts (20) erstreckt, wobei der Profilabschnitt einen Vorderkantenabschnitt und einen Hinterkantenabschnitt aufweist; und
mindestens einen ersten Aktor (102), der sich in dem Wurzelendenabschnitt des Rotorblatts (20) befindet, wobei der mindestens eine erste Aktor dazu konfiguriert ist, das Rotorblatt (20) um eine Nickachse des Blatts anzustellen,
**gekennzeichnet durch**
mindestens eine Steuerfläche (110, 112), die in dem Profilabschnitt des Rotorblatts (20) befestigt ist;
mindestens einen zweiten Aktor (104), der sich in dem Profilabschnitt des Rotorblatts (20) befindet, wobei der mindestens eine zweite Aktor dazu konfiguriert ist, die mindestens eine Steuerfläche (110, 112) anzusteuern, wobei die mindestens eine Steuerfläche (110, 112) mindestens eines von einer Klappe (110), die sich an dem Hinterkantenabschnitt des Rotorblatts (20) befindet, und einem Vorflügel (112), der sich an dem Vorderkantenabschnitt des Rotorblatts (20) befindet, einschließt; und
einen Steuereingang/-ausgang (106), der dazu konfiguriert ist, die mindestens eine Steuerfläche (110, 112) zurück in eine neutrale Position zu bewegen, wenn ein Ausfall die mindestens eine Steuerfläche (110, 112) funktionsunfähig macht.

2. Luftfahrzeug (10), umfassend:
eine Zelle (14);
ein Rotorsystem (12, 16, 18), das an der Zelle (14) befestigt ist, wobei das Rotorsystem (12, 16, 18) eine Vielzahl von Rotorblättern (20) einschließt, wobei jedes von der Vielzahl von Rotorblättern (20) ein Rotorblatt (20) für ein Luftfahrzeug nach Anspruch 1 einschließt.

3. Luftfahrzeug (10) nach Anspruch 2, wobei:
ein Flugsteuerungscomputer dazu konfiguriert ist, das Maß der Anstellung des Rotorblatts (20) um die Nickachse zu befehlen, um mindestens eines von größerer harmonischerer Steuerung, nichtsinusförmiger azimutaler Blattanstellungszuordnung, Reduktion der Blattvibration, Reduktion der Blattbeanspruchung und Blattspitzenabstand zu erreichen.

4. Verfahren zum Steuern eines Rotorblatts (20) eines Luftfahrzeugs (10) nach Anspruch 1, wobei das Verfahren Folgendes umfasst:
Drehen des Rotorblatts (20) um die Nickachse unter Verwendung der mindestens einen Steuerfläche (110, 112), die sich auf dem Rotorblatt (20) befindet, und des mindestens einen Aktors (102), der dazu konfiguriert ist, das Rotorblatt (20) um die Nickachse anzustellen.

## Revendications

1. Pale de rotor d'aéronef (20) comprenant :
une partie d'extrémité de racine de la pale de rotor (20) s'étendant jusqu'à une partie de pointe de la pale de rotor (20) à travers une partie de surface portante de la pale de rotor (20), la partie de surface portante ayant une partie de bord d'attaque et une partie de bord de fuite ; et
au moins un premier actionneur (102) situé à l'intérieur de la partie d'extrémité de racine de la pale de rotor (20), l'au moins un premier actionneur étant configuré pour incliner la pale de rotor (20) autour d'un axe de tangage de pale,
**caractérisée par**
au moins une surface de commande (110, 112) montée à l'intérieur de la partie de surface portante de la pale de rotor (20) ;
au moins un second actionneur (104) situé à l'intérieur de la partie de surface portante de la pale de rotor (20), l'au moins un second actionneur étant configuré pour actionner l'au moins une surface de commande (110, 112), dans laquelle l'au moins une surface de commande (110, 112) comporte au moins un élément parmi un volet (110) situé au niveau de la partie de bord de fuite de la pale de rotor (20) et un bec (112) situé au niveau de la partie de bord d'attaque de la pale de rotor (20) ; et
une entrée/sortie de commande (106) configurée pour replacer l'au moins une surface de commande (110, 112) dans une position neutre lorsqu'une défaillance rend l'au moins une surface de commande (110, 112) inopérante.

2. Aéronef (10) comprenant :
une cellule (14) ;
un système de rotor (12, 16, 18) monté sur la cellule (14), le système de rotor (12, 16, 18) comportant une pluralité de pales de rotor (20), chacune de la pluralité de pales de rotor (20) comportant une pale de rotor d'aéronef (20) selon la revendication 1.

3. Aéronef (10) selon la revendication 2, dans lequel :
un ordinateur de commande de vol est configuré pour commander l'angle de tangage de la pale de rotor (20) autour de l'axe de tangage pour atteindre au moins l'une d'une commande d'harmonie supérieure, d'une cartographie de tangage azimutale non sinusoïdale, d'une réduction de vibration de pale, d'une réduction de contrainte de pale, et d'un jeu à la pointe de pale.

4. Procédé de commande d'une pale de rotor (20) d'un aéronef (10) selon la revendication 1, le procédé comprenant :
la rotation de la pale de rotor (20) autour de l'axe de tangage en utilisant l'au moins une surface de commande (110, 112) située sur la pale de rotor (20) et l'au moins un premier actionneur (102) configuré pour incliner la pale de rotor (20) autour de l'axe de tangage.
